# EUROPEAN PATENT SPECIFICATION

(11) **EP 3 770 211 B1**
(45) Date of publication and mention of the grant of the patent: **13.05.2026**
(21) Application number: 18942296.7
(22) Date of filing: 05.12.2018
(51) Int. Cl.: C08L 23/12, C08L 23/16, C08L 23/06, C08K 3/36, C08L 23/14, B32B 27/06, B32B 27/08, B32B 33/00, B32B 27/16

(54) **POLYPROPYLENE FILM AND POLYPROPYLENE COMPOSITE FILM**
POLYPROPYLENFOLIE UND POLYPROPYLENVERBUNDFOLIE
FILM DE POLYPROPYLÈNE ET FILM COMPOSITE DE POLYPROPYLÈNE

(43) Date of publication of application: 27.01.2021
(73) Proprietor: Guangdong Tianan New Material Co., Ltd, Foshan, Guangdong 528000 (CN)
(72) Inventor: WU, Qichao, Foshan, Guangdong 528000 (CN); CHEN, Huixue, Foshan, Guangdong 528000 (CN); ZHOU, Chunfa, Foshan, Guangdong 528000 (CN); HUANG, Jianghao, Foshan, Guangdong 528000 (CN); SONG, Daiying, Foshan, Guangdong 528000 (CN); MENG, Lijie, Foshan, Guangdong 528000 (CN); PANG, Yongtao, Foshan, Guangdong 528000 (CN)
(74) Representative: HGF
(86) International application number: PCT/CN2018/119326
(87) International publication number: WO 2020/113455

(56) References cited:
- CN-A- 103 059 422
- CN-A- 103 692 745
- CN-A- 103 724 818
- CN-C- 100 540 296

## Description

### FIELD

The present disclosure relates to the field of decorative accessories, specifically to a polypropylene membrane and a polypropylene composite membrane.

### BACKGROUND

In the existing decorative materials market, as consumers' awareness of environmental protection increases, the requirements for materials are becoming stricter. Since polyvinyl chloride (PVC) resin contains elemental chlorine, a harmful substance (Dioxin) released during its incineration process is a highly carcinogenic substance, which directly harms the environment and people's health. Therefore, PVC is regarded as a non-environmental protection factor. In the future, PVC will be eliminated as a material. Therefore, within the scope of thermoplastics, the industry hopes to replace PVC with another environmentally friendly thermoplastic resin. The first consideration is to replace with polypropylene (PP). Patent CN 100540296 C discloses a membrane composition comprising 20 wt% polypropylene, 20 wt% linear low-density polyethylene (LLDPE), 20% very low density polyethylene (VLDPE), 30% ethylene-propylene-diene (EPDM) rubber, 10 wt% of an ethylene copolymer, and 0,5 wt% crosslinking agent.

The decorative material is mainly formed by compounding the decorative film and the skeleton through secondary molding methods such as thermal bonding, coating, and vacuum forming. The skeleton can be various shapes of wood, plastic, metal, etc. However, due to the low melt strength of polypropylene, it is easy to rupture during high-temperature vacuum forming, which limits the use of PP decorative films.

### SUMMARY

In view of this, a technical problem to be solved in the present disclosure is providing a polypropylene membrane and a polypropylene composite membrane, and the polypropylene membrane has a low vacuum forming temperature and a high melt strength.

The present disclosure provides a polypropylene membrane as defined by claim 1 in the set of claims.

Preferably, the polypropylene membrane further comprises 1-10 parts by weight of calcium carbonate.

Preferably, the polypropylene membrane further comprises 0.1-1 parts by weight of a stabilizer; and the stabilizer is selected from hindered amine light stabilizer and/or anti-ultraviolet agent.

Preferably, the polypropylene membrane further comprises 0.2-1.8 parts by weight of an external lubricant; and the external lubricant is selected from a group consisting of metal soap lubricants and/or fatty acid salt lubricants.

Preferably, the polypropylene membrane further comprises 0.3-1.5 parts by weight of high-molecular-weight organosilicon.

The present disclosure further provides a polypropylene composite membrane, which is made by subjecting a composite membrane to radiation administration, and the composite membrane comprises following raw materials in order,
a first polypropylene membrane;
a first coating layer;
a printing layer;
a second coating layer;
a second polypropylene membrane; and
a polyurethane coating;
the first polypropylene membrane is the polypropylene membrane as defined by claim 1 in the set of claims;
the first coating layer and the second coating layer are independently selected from a chlorinated polypropylene coating or a reactive polyurethane coating.

Preferably, a glue coating is disposed on one side, to which is not contact with the first coating layer, of the first polypropylene membrane.

Preferably, a third coating layer is disposed between the second polypropylene membrane and the polyurethane coating; and the third coating layer is a chlorinated polypropylene coating or a reactive polyurethane coating.

Preferably, the second polypropylene membrane is the polypropylene membrane as defined by claim 1 in the set of claims.

The present disclosure provides a polypropylene membrane, which is formed by a method comprising the steps of mixing of the following raw materials, film formation, and radiation modification, the raw materials comprising: 20-50 parts by weight of polypropylene; 20-45 parts by weight of polyolefin elastomer; 30-60 parts by weight of polyethylene; 1-8 parts by weight of ethylene-vinyl acetate copolymer; 0.5-10 parts by weight of cross-linking agent; and 0-1 parts by weight of silicon dioxide. Comparing with the conventional art, the vacuum forming temperature of the polypropylene membrane is decreased by adjusting the amounts of main ingredients (polypropylene, polyolefin elastomer and polyethylene) in the present disclosure. At the same time, after the radiation modification, the molecular chains of the polymers crosslink and twist with each other, and the melt strength of the polypropylene membrane is increased, making the molecular chains hard to move during the high-temperature vacuum forming, thereby making the product obtained by vacuum forming not easy to rupture and the surface details of the products not easy to become shallow or even disappear.

### DETAILED DESCRIPTION

The technical solutions in the embodiments of the present disclosure will be described clearly and completely in combination with the embodiments of the present disclosure. Obviously, the described embodiments are only a part of the embodiments of the present disclosure, but not all the embodiments. Based on the embodiments of the present disclosure, all other embodiments obtained by one of ordinary skill in the art without making creative efforts fall within the scope of protection of the present disclosure.

The present disclosure provides a polypropylene membrane, which is formed by a method comprising the steps of mixing of raw materials, film formation, and radiation modification,

| | |
|---|---|
| polypropylene | 20-50 parts by weight; |
| polyolefin elastomer | 20-45 parts by weight; |
| polyethylene | 30-60 parts by weight; |
| ethylene-vinyl acetate copolymer | 1-8 parts by weight; |
| cross-linking agent | 0.5-10 parts by weight; and |
| silicon dioxide | 0-1 parts by weight; |

wherein the polyolefin elastomer, also called polyolefin thermoplastic elastomer (TPO), is a two-phase separated polymer mixture composed of rubber and polyolefin resin, wherein the rubber is any one selected from a group consisting of ethylene propylene diene monomer rubber (EPDM), nitrile-butadiene rubber (NBR) and butyl rubber (IIR), or a mixture thereof.

There is no special restriction on sources of all the raw materials in the present disclosure, and can be purchased from the market.

The polypropylene can be the polypropylene well-known to one of ordinary skill in the art, and is not extra limited, and is preferably copolymerized polypropylene in the present disclosure. The melt flow rate of the polypropylene is preferably 2-5g/10min; and the content of the polypropylene is preferably 20-40 parts by weight, more preferably 20-30 parts by weight, and further more preferably 20-25 parts by weight.

Polyolefin elastomer, also called polyolefin thermoplastic elastomer (TPO), is a two-phase separated polymer mixture composed of rubber and polyolefin resin. The rubber is any one selected from a group consisting of of ethylene propylene diene monomer rubber (EPDM), nitrile-butadiene rubber (NBR) and butyl rubber (IIR), or a mixture thereof. In the present invention, the polyolefin elastomer is preferably a PP/EPDM thermoplastic elastomer, which is a two-phase separated polymer mixture composed of EPDM and PP, which combines the high strength of PP material and the rubber elasticity of EPDM. Preferably, the PP and the EPDM has a mass ratio of (90:10)-(55:45), and more preferably (85:15)-(65:35). The polyolefin elastomer may be one kind, or multiple kinds. To facilitate adjusting the hardness of the product, the polyolefin elastomer preferably comprises a mixture of polyolefins having different hardness, more preferably comprises a polyolefin elastomer having a shore hardness A of 60-90 and a polyolefin elastomer having a shore hardness D of 25-50; the mass ratio of them two is preferably 9:1-7:3; the content of the polyolefin elastomer in the polypropylene membrane provided by the present disclosure is preferably 25-45 parts by weight, more preferably 30-40 parts by weight.

The polyethylene may be any polyethylene well-known to one of ordinary skill in the art without any specific restriction, and it is preferably low-density polyethylene in the present disclosure. The low-density polyethylene is a polyethylene which averagely comprises only several branches in every 1000 carbon atoms, and commonly has a density of 0.912-0.940g/cm³. The melt flow rate (MFR) of the polyethylene is preferably 0.5-20 g/10 min, more preferably 0.9-15 g/10 min, further more preferably 1-10 g/10 min, and the most preferably 0.8-5 g/10 min. The content of the polyethylene is preferably 35-55 parts by weight, more preferably 35-50 parts by weight, further more preferably 40-45 parts by weight.

Ethylene-vinyl acetate copolymer is further included in the polypropylene membrane provided by the present disclosure. The ethylene-vinyl acetate copolymer may be any ethylene-vinyl acetate copolymer well-known to one of ordinary skill in the art without any extra restriction, and is a kind of thermoplastic resin made from ethylene and vinyl acetate by copolymerization. The molar content of vinyl acetate in ethylene-vinyl acetate copolymer of the present disclosure is preferably 15-30%; and the melt flow rate (MFR) of the ethylene-vinyl acetate copolymer is preferably 0.5-4g/110min; the hardness of the ethylene-vinyl acetate copolymer is preferably Shord D 25-40; and the content of the ethylene-vinyl acetate copolymer is preferably 1-8 parts by weight, more preferably 2-6 parts by weight.

Due to polypropylene and polyethylene are easy to degrade under electron beam radiation, adding a cross-linking agent make the molecular chains cross-link in the effect of the cross-linking agent when the product is subjected to electron beam radiation, and radiation degradation rate decrease in large scale, which make the product easy to cross-link when subjecting to electron beam radiation. The product with a certain degree of cross-link is not easy to be ruptured in the following vacuum forming process. The cross-linking agent may be a cross-linking agent well-known to one of ordinary skill in the art without any specific restriction. In the present disclosure, the cross-linking agent is preferably difunctional or multifunctional compound, more preferably one or more selected from a group consisting of trimethylolpropane trimethacrylate (TMPTMA), trimethylolpropane triacrylate (TMPTA), dimethylolpropane dimethacrylate (DMPDMA), triallyl isocyanurate (TAIC), triallyl isocyanurate (TAC) and diethylene glycol dimethacrylate (DEGDMA). The content of the cross-linking agent is preferably 1-8 parts by weight, more preferably 2-6 parts by weight.

Among all the ingredients of the recipe, some small molecule may slightly precipitate. Thus, it is needed to add silicon dioxide, which is able to absorb the precipitation and facilitates flattening. The content of the silicon dioxide is preferably 0.1-0.8 parts by weight, more preferably 0.1-0.6 parts by weight, further more preferably 0.2-0.4 parts by weight.

In the present disclosure, the polypropylene membrane preferably further comprises calcium carbonate of 1-10 parts by weight, more preferably 2-8 parts by weight, further more preferably 2-6 parts by weight. Calcium carbonate is added in a relatively small amount, and mainly plays a role of strengthen, and the performance may decrease when the amount is larger than a certain quantity.

In order to improve the stability of polypropylene membrane, the polypropylene membrane preferably further comprises a stabilizer of 0.1-1 parts by weight, more preferably 0.2-0.8 parts by weight, further more preferably 0.4-0.6 parts by weight. The stabilizer may be a stabilizer well-known to one of ordinary skill in the art without any specific restriction. In the present disclosure, it is preferably hindered amine light stabilizer and/or anti-ultraviolet agent, which may improve the photostability of polypropylene membrane, and delay aging. The hindered amine light stabilizer may be a hindered amine light stabilizer well-known to one of ordinary skill in the art without any specific restriction. In the present disclosure, it is one or more selected from a group consisting of stabilizer 622, stabilizer 770 and stabilizer 944. The anti-ultraviolet agent may be a anti-ultraviolet agent well-known to one of ordinary skill in the art without any specific restriction. It is preferably a diphenylmethanone type anti-ultraviolet agent and/or benzotriazole type anti-ultraviolet agent.

In the present disclosure, the polypropylene membrane preferably further comprises an external lubricant of 0.2-1.8 parts by weight, more preferably 0.4-1.5 parts by weight, and further more preferably 0.8-1 parts by weight. The external lubricant may be an external lubricant well-known to one of ordinary skill in the art without specific restrictions. In the present disclosure, the external lubricant is preferably metal soap lubricants and/or fatty acid salt lubricants, more preferably one selected from a group consisting of calcium stearate, zinc stearate and lead stearate, or a mixture thereof. The external lubricant has a relatively bad compatibility with polymer, and is easy to move from the internal of the melt to the outside of which, thus a lubricative film is formed on the interface between the plastic melt and the metal, which prevents adhering to a metal roller.

In the present disclosure, the polypropylene membrane preferably further comprises high-molecular-weight organosilicon of 0.3-1.5 parts by weight, and more preferably 0.5-1 parts by weight. The high-molecular-weight organosilicon assists the external lubricant, and inhibits the precipitation caused by excessive external lubricant.

The polypropylene membrane provided by the present disclosure preferably further comprises 0.1-10 parts by weight of pigments. The pigment may be a pigment well-known to one of ordinary skill in the art without any specific restriction. In the present disclosure, the pigment may be carbon black, phthalocyanine pigments, other heterocyclic pigments such as indole, titanium oxide, etc.

The polypropylene membrane provided by the present disclosure may be prepared by a method well-known to one of ordinary skill in the art without any specific restriction. In the present disclosure, the method for preparing is preferably flattening. The ingredients such as polypropylene, the polyolefin elastomer, the polyethylene, the ethylene-vinyl acetate copolymer, the cross-linking agent, the silicon dioxide, etc., are mixed, and subjected to a flattening process. For example, the polypropylene, polyolefin elastomer, the polyethylene and the ethylene-vinyl acetate copolymer are added in a high speed homogenizer, then the cross-linking agent, the silicon dioxide and optional ingredients are added, and stirred well. Then the materials are transferred into an internal mixer, and preliminarily melt in the internal mixer. Then the materials are transferred into a two roll rubber mill to refine, filtered, transferred into a flattening roller, flattened to form a membrane, and finally subjected to low energy electron beam radiation to obtain a polypropylene membrane. The flattening temperature is preferably 160°C-190°C, the energy of the radiation is preferably 200-500 kV, more preferably 200-400 kV, further more preferably 200-300 kV, and the most preferably 250 kV. The radiation dose is preferably 40-100 kGy. After the radiation dose is set, the electron beam density can be adjusted according to the running velocity of the device.

In the present disclosure, the vacuum forming temperature of the polypropylene membrane is decreased by adjusting the amounts of main ingredients (polypropylene, polyolefin elastomer and polyethylene) in the present disclosure. At the same time, after the radiation modification, the molecular chains of the polymers crosslink and twist with each other, and the melt strength of the polypropylene membrane is increased, making the molecular chains hard to move during the high-temperature vacuum forming, thereby making the surface details of the products obtained by vacuum forming not easy to become shallow or even disappear.

The present disclosure further provides a polypropylene composite membrane, which is made by subjecting a composite membrane to radiation administration, and the composite membrane comprises following raw materials in order,
a first polypropylene membrane;
a first coating layer;
a printing layer;
a second coating layer;
a second polypropylene membrane; and
a polyurethane coating;
the first polypropylene membrane is consisted of the following ingredients, comprising: 20-50 parts by weight of polypropylene; 20-45 parts by weight of polyolefin elastomer as defined above; 30-60 parts by weight of polyethylene; 1-8 parts by weight of ethylene-vinyl acetate copolymer; 0.5-10 parts by weight of cross-linking agent; 0-1 parts by weight of silicon dioxide;and
the first coating layer and the second coating layer are independently selected from a chlorinated polypropylene coating or a reactive polyurethane coating.

Therein, the sources of all the raw materials in the present disclosure are not extra limited, and can be purchased from the market.

The first polypropylene membrane is the same as the polypropylene membrane, and is not repeated again herein. The thickness of the first polypropylene membrane is preferably 0.05-0.5mm, more preferably 0.1-0.3mm, further more preferably 0.1-0.2mm. In the present disclosure, a glue coating is disposed on one side, to which is not contact with the first coating layer, of the first polypropylene membrane. The glue coating may be any glue coating well-known to one of ordinary skill in the art without any specific restriction, and is preferably a thermoset glue coating or a hot melt glue coating in the present disclosure. The glue coating make the polypropylene composite membrane fix tightly to the components such as a plank, a steel plate, etc., as decorative film. The wet coated weight of the glue coating is preferably 15-30 g/m².

A first coating layer is disposed on the first polypropylene membrane. Due to the polypropylene membrane is nonpolar, and the printing layer is polar, they are incompatible with each other, and cannot be fixed tightly. Thus, the first coating layer is required, which plays a role of solubilizer. The wet coated weight of the first coating layer is preferably 7-20 g/m². In order to improve the adhesive force between the first polypropylene membrane and the first coating layer, the first polypropylene membrane is preferably subjected to a surface treatment. The surface treatment may be a surface treatment well-known to one of ordinary skill in the art without specific restriction, and is preferably one or more selected form corona treatment, flame treatment and plasma treatment in the present disclosure. After the surface treatment, active groups or free radicals are generated on the surface of the first polypropylene membrane, which are easy to react with the material of the first coating layer, improving the adhesive force of the first coating layer. The first coating layer is preferably a chlorinated polypropylene or a reactive polyurethane coating. The chlorinated polypropylene (CPP) coating any be a chlorinated polypropylene well-known to one of ordinary skill in the art without specific restriction. There is chloride group (-Cl-) in the structure of CPP, which is polar and may combine tightly with the polar printing layer. The non-polar propylene group and the non-polar first polypropylene membrane combine tightly, and CPP plays a role of compatilizer. The reactive polyurethane coating may be a polyurethane coating well-known to one of ordinary skill in the art without specific restriction, which may be water-based or oily. The reactive polyurethane coating may reactive with the active groups or free radicals generated during the pre-treatment of the first polypropylene membrane, forming a chemical bonds, thereby achieving a good adhesive force.

The printing layer may be a printing layer well-known to one of ordinary skill in the art without specific restriction, which plays a role of printing and coloring.

The printing layer is easy to wear and peels off when being used. Thus, it is need to fixed tightly to the second polypropylene membrane to protect the printing layer. Due to the problem of incompatibility also exists between the second polypropylene membrane and the printing layer, a second coating layer is set on the printing layer. The wet coated weight of the second coating layer is preferably 7-20 g/m². The second coating layer is preferably a chlorinated polypropylene coating or a reactive polyurethane coating. Both the chlorinated polypropylene coating and the reactive polyurethane coat are the same with these above, which are not repeated herein .

The second polypropylene membrane is preferably a transparent polypropylene membrane, the polypropylene membrane is the same as that above, and is not repeated again herein. The second polypropylene membrane preferably has a thickness of 0.04-0.2 mm, more preferably 0.04-0.1mm. In order to improve the bonding force between the second polypropylene membrane and the second coating layer, the second polypropylene membrane preferably subjected to surface treatment firstly, and then combining with the second coating layer. The surface face treatment is the same as that above, and is not repeated herein.

A polyurethane coating is set on the second polypropylene membrane to improve the scratch-resistance of the surface of the composite membrane. The printing layer is protected by combing the scratch-resistance of the polyurethane coating and the solvent resistance and absorbability of the second polypropylene membrane. The second polypropylene membrane preferably subjected to surface treatment firstly, and then coated with a polyurethane coating. The surface face treatment is the same as that above, and is not repeated herein. The polyurethane coating may be a polyurethane coating well-known to one of ordinary skill in the art without any specific restriction, and is preferably a water-based polycarbonate polyurethane coating in the present disclosure. The wet coated weight of the polyurethane coating is preferably 7-20 g/m².

There is preferably a third coating layer between the first polypropylene membrane and the polyurethane coating to improve the binding force between the first polypropylene membrane and the polyurethane coating. The second polypropylene membrane preferably subjected to surface treatment firstly, and then coated with a third coating layer. The surface face treatment is the same as that above, and is not repeated herein. The third coating layer is preferably a chlorinated polypropylene coating or a reactive polyurethane coating. Both the chlorinated polypropylene coating and the reactive polyurethane coat are the same with these above, which are not repeated herein. The wet coated weight of the third coating layer is preferably 7-20 g/m².

After the composite membrane is formed, the composite membrane is subjected to radiation treatment to obtain a polypropylene composite membrane. The radiation treatment may be a method well-known to one of ordinary skill in the art without any specific restriction, and is preferably a low energy electron beam radiation in the present disclosure. The energy of the radiation is preferably 200-500 kV, more preferably 200-400 kV, further more preferably 200-300 kV, and the most preferably 250 kV The radiation dose is preferably 40-100 kGy. After the radiation dose is set, the electron beam density can be adjusted according to the running velocity of the device.

In the present disclosure, the vacuum forming temperature of the polypropylene membrane is decreased by adjusting the amounts of main ingredients (polypropylene, polyolefin elastomer and polyethylene) in the present disclosure. At the same time, after the radiation modification, the molecular chains of the polymers crosslink and twist with each other, and the melt strength of the polypropylene membrane is increased, making the molecular chains hard to move during the high-temperature vacuum forming, thereby making the surface details of the products obtained by vacuum forming not easy to become shallow or even disappear; moreover, due to the melt strength increases, the tensile deformation during the vacuum forming increases, and even positions suffering from a larger tensile deformation (such as the corners) is not easy to rupture.

It should be noted that the terms "first" and "second" in the description and claims of the present invention and the above drawings are used to distinguish similar objects, and do not have to be used to describe a specific order or sequence. It should be understood that the data used in this way can be interchanged under appropriate circumstances to facilitate the embodiments of the present invention described herein. In addition, the terms "comprising" and "having" and any variations thereof are intended to cover non-exclusive inclusions (e.g., a process, a method, a system, a product, or a device that comprises a series of steps or units need not be limited to those steps or units that are clearly listed), but may include other steps or units not explicitly listed or inherent to these processes, methods, products or equipment.

For further illustrate the present disclosure, the polypropylene membrane and polypropylene composite membrane provided by the present disclosure will be described in detail in combine with embodiments hereinafter.

All the reagents used in the following examples were purchased from the market.

### Example 1 (comparative example)

20 parts by weight of polypropylene (the melt flow rate was 2.0g/10min), 20 parts by weight of polyolefin elastomer (the mass ratio of PP and EPDM was 90:10; and the mass ratio of a polyolefin elastomer having a shore hardness A of 60 and a polyolefin elastomer having a shore hardness D of 25 was 9:1) and 60 parts by weight of low-density polyethylene (the melt flow rate was 0.5 g/10 min) were stirred in a high speed homogenizer, then 0.5 parts by weight of TMPTA was added in and stirred evenly. Then the materials were preliminary melt in an internal mixer, refined in a two roll rubber mill, filtered, transferred into a flattening roller, and flattened to form a membrane at 170°C. Finally, the membrane was subjected to low energy electron beam radiation (the energy was 250 kV, and the radiation dose was 40 kGy) to obtain a polypropylene membrane.

The performances of polypropylene membrane obtained in Example 1 were tested, and the results were shown in Table 1.

### Example 2 (comparative example)

20 parts by weight of polypropylene(the melt flow rate was 2.0 g/10min), 30 parts by weight of polyolefin elastomer (the mass ratio of PP and EPDM was 85:15; and the mass ratio of a polyolefin elastomer having a shore hardness A of 60 and a polyolefin elastomer having a shore hardness D of 50 was 9:1) and 50 parts by weight of low-density polyethylene (the melt flow rate was 0.5 g/10 min) were stirred in a high speed homogenizer, then 1 parts by weight of TMPTA was added in and stirred evenly. Then the materials were preliminary melt in an internal mixer, refined in a two roll rubber mill, filtered, transferred into a flattening roller, and flattened to form a membrane at 170°C. Finally, the membrane was subjected to low energy electron beam radiation (the energy was 250 kV, and the radiation dose was 40 kGy) to obtain a polypropylene membrane.

The performances of polypropylene membrane obtained in Example 2 were tested, and the results were shown in Table 1.

### Example 3 (comparative example)

20 parts by weight of polypropylene(the melt flow rate was 2.0g/10min), 45 parts by weight of polyolefin elastomer (the mass ratio of PP and EPDM was 65:35; and the mass ratio of a polyolefin elastomer having a shore hardness A of 70 and a polyolefin elastomer having a shore hardness D of 25 was 9:1) and 35 parts by weight of low-density polyethylene (the melt flow rate was 0.5 g/10 min) were stirred in a high speed homogenizer, then 0.5 parts by weight of TMPTA was added in and stirred evenly. Then the materials were preliminary melt in an internal mixer, refined in a two roll rubber mill, filtered, transferred into a flattening roller, and flattened to form a membrane at 170°C. Finally, the membrane was subjected to low energy electron beam radiation (the energy was 250 kV, and the radiation dose was 40 kGy) to obtain a polypropylene membrane.

The performances of polypropylene membrane obtained in Example 3 were tested, and the results were shown in Table 1.

### Example 4 (comparative example)

25 parts by weight of polypropylene(the melt flow rate was 2.5g/10min), 45 parts by weight of polyolefin elastomer (the mass ratio of PP and EPDM was 90: 10; and the mass ratio of a polyolefin elastomer having a shore hardness A of 80 and a polyolefin elastomer having a shore hardness D of 30 was 9:1) and 30 parts by weight of low-density polyethylene (the melt flow rate was 2 g/10 min) were stirred in a high speed homogenizer, then 0.5 parts by weight of TMPTA was added in and stirred evenly. Then the materials were preliminary melt in an internal mixer, refined in a two roll rubber mill, filtered, transferred into a flattening roller, and flattened to form a membrane at 170°C. Finally, the membrane was subjected to low energy electron beam radiation (the energy was 250 kV, and the radiation dose was 40 kGy) to obtain a polypropylene membrane.

The performances of polypropylene membrane obtained in Example 4 were tested, and the results were shown in Table 1.

### Example 5 (comparative example)

35 parts by weight of polypropylene(the melt flow rate was 2.5 g/10min), 20 parts by weight of polyolefin elastomer (the mass ratio of PP and EPDM was 55:45; and the mass ratio of a polyolefin elastomer having a shore hardness A of 90 and a polyolefin elastomer having a shore hardness D of 50 was 9:1) and 45 parts by weight of low-density polyethylene (the melt flow rate was 3 g/10 min) were stirred in a high speed homogenizer, then 0.5 parts by weight of TMPTA was added in and stirred evenly. Then the materials were preliminary melt in an internal mixer, refined in a two roll rubber mill, filtered, transferred into a flattening roller, and flattened to form a membrane at 170°C. Finally, the membrane was subjected to low energy electron beam radiation (the energy was 250 kV, and the radiation dose was 40 kGy) to obtain a polypropylene membrane.

The performances of polypropylene membrane obtained in Example 5 were tested, and the results were shown in Table 1.

### Example 6 (comparative example)

35 parts by weight of polypropylene(the melt flow rate was 2.5g/10min), 35parts by weight of polyolefin elastomer (the mass ratio of PP and EPDM was 90: 10; and the mass ratio of a polyolefin elastomer having a shore hardness A of 90 and a polyolefin elastomer having a shore hardness D of 30 was 9:1) and 30 parts by weight of low-density polyethylene (the melt flow rate was 3 g/10 min) were stirred in a high speed homogenizer, then 0.5 parts by weight of TMPTA was added in and stirred evenly. Then the materials were preliminary melt in an internal mixer, refined in a two roll rubber mill, filtered, transferred into a flattening roller, and flattened to form a membrane at 170°C. Finally, the membrane was subjected to low energy electron beam radiation (the energy was 250 kV, and the radiation dose was 40 kGy) to obtain a polypropylene membrane.

The performances of polypropylene membrane obtained in Example 6 were tested, and the results were shown in Table 1.

### Example 7 (comparative example)

45 parts by weight of polypropylene(the melt flow rate was 3.0 g/10min), 20 parts by weight of polyolefin elastomer (the mass ratio of PP and EPDM was 90: 10; and the mass ratio of a polyolefin elastomer having a shore hardness A of 70 and a polyolefin elastomer having a shore hardness D of 50 was 8:2) and 35 parts by weight of low-density polyethylene (the melt flow rate was 10 g/10 min) were stirred in a high speed homogenizer, then 0.5 parts by weight of TMPTA was added in and stirred evenly. Then the materials were preliminary melt in an internal mixer, refined in a two roll rubber mill, filtered, transferred into a flattening roller, and flattened to form a membrane at 170°C. Finally, the membrane was subjected to low energy electron beam radiation (the energy was 250 kV, and the radiation dose was 40 kGy) to obtain a polypropylene membrane.

The performances of polypropylene membrane obtained in Example 7 were tested, and the results were shown in Table 1.

### Example 8 (comparative example)

45 parts by weight of polypropylene(the melt flow rate was 3.0 g/10min), 25 parts by weight of polyolefin elastomer (the mass ratio of PP and EPDM was 90: 10; and the mass ratio of a polyolefin elastomer having a shore hardness A of 80 and a polyolefin elastomer having a shore hardness D of 50 was 8:2) and 30 parts by weight of low-density polyethylene (the melt flow rate was 0.5 g/10 min) were stirred in a high speed homogenizer, then 0.5 parts by weight of TMPTA was added in and stirred evenly. Then the materials were preliminary melt in an internal mixer, refined in a two roll rubber mill, filtered, transferred into a flattening roller, and flattened to form a membrane at 170°C. Finally, the membrane was subjected to low energy electron beam radiation (the energy was 250 kV, and the radiation dose was 40 kGy) to obtain a polypropylene membrane.

The performances of polypropylene membrane obtained in Example 8 were tested, and the results were shown in Table 1.

### Example 9 (comparative example)

50 parts by weight of polypropylene(the melt flow rate was 3.0g/10min), 20 parts by weight of polyolefin elastomer (the mass ratio of PP and EPDM was 90: 10; and the mass ratio of a polyolefin elastomer having a shore hardness A of 60 and a polyolefin elastomer having a shore hardness D of 50 was 8:2) and 30 parts by weight of low-density polyethylene (the melt flow rate was 0.5 g/10 min) were stirred in a high speed homogenizer, then 5 parts by weight of TMPTA was added in and stirred evenly. Then the materials were preliminary melt in an internal mixer, refined in a two roll rubber mill, filtered, transferred into a flattening roller, and flattened to form a membrane at 170°C. Finally, the membrane was subjected to low energy electron beam radiation (the energy was 250 kV, and the radiation dose was 40 kGy) to obtain a polypropylene membrane.

The performances of polypropylene membrane obtained in Example 9 were tested, and the results were shown in Table 1.

### Example 10 (comparative example)

20 parts by weight of polypropylene(the melt flow rate was 3.0 g/10min), 20 parts by weight of polyolefin elastomer (the mass ratio of PP and EPDM was 90: 10; and the mass ratio of a polyolefin elastomer having a shore hardness A of 60 and a polyolefin elastomer having a shore hardness D of 25 was 8:2) and 60 parts by weight of low-density polyethylene (the melt flow rate was 0.5 g/10 min) and 1 part by weight of ethylene-vinyl acetate copolymer (the MFR was 0.5 g/10 min) were stirred in a high speed homogenizer, then 2 parts by weight of TMPTA was added in and stirred evenly. Then the materials were preliminary melt in an internal mixer, refined in a two roll rubber mill, filtered, transferred into a flattening roller, and flattened to form a membrane at 170°C. Finally, the membrane was subjected to low energy electron beam radiation (the energy was 250 kV, and the radiation dose was 40 kGy) to obtain a polypropylene membrane.

The performances of polypropylene membrane obtained in Example 10 were tested, and the results were shown in Table 1.

### Example 11 (comparative example)

20 parts by weight of polypropylene(the melt flow rate was 3.8 g/10min), 30 parts by weight of polyolefin elastomer (the mass ratio of PP and EPDM was 90: 10; and the mass ratio of a polyolefin elastomer having a shore hardness A of 60 and a polyolefin elastomer having a shore hardness D of 50 was 8:2) and 50 parts by weight of low-density polyethylene (the melt flow rate was 0.5 g/10 min) and 2 parts by weight of ethylene-vinyl acetate copolymer (the MFR was 2 g/10 min) were stirred in a high speed homogenizer, then 8 parts by weight of TMPTA was added in and stirred evenly. Then the materials were preliminary melt in an internal mixer, refined in a two roll rubber mill, filtered, transferred into a flattening roller, and flattened to form a membrane at 170°C. Finally, the membrane was subjected to low energy electron beam radiation (the energy was 250 kV, and the radiation dose was 40 kGy) to obtain a polypropylene membrane.

The performances of polypropylene membrane obtained in Example 11 were tested, and the results were shown in Table 1.

### Example 12 (according to the claimed invention)

20 parts by weight of polypropylene(the melt flow rate was 3.8 g/10min), 45 parts by weight of polyolefin elastomer (the mass ratio of PP and EPDM was 90: 10; and the mass ratio of a polyolefin elastomer having a shore hardness A of 70 and a polyolefin elastomer having a shore hardness D of 25 was 8:2) and 35 parts by weight of low-density polyethylene (the melt flow rate was 0.5 g/10 min) and 6 parts by weight of ethylene-vinyl acetate copolymer (the MFR was 2 g/10 min) were stirred in a high speed homogenizer, then 0.5 parts by weight of TMPTA and 0.5 parts by weight of silicon dioxide were added in and stirred evenly. Then the materials were preliminary melt in an internal mixer, refined in a two roll rubber mill, filtered, transferred into a flattening roller, and flattened to form a membrane at 170°C. Finally, the membrane was subjected to low energy electron beam radiation (the energy was 250 kV, and the radiation dose was 40 kGy) to obtain a polypropylene membrane.

The performances of polypropylene membrane obtained in Example 12 were tested, and the results were shown in Table 1.

### Example 13 (according to the claimed invention)

25 parts by weight of polypropylene(the melt flow rate was 3.8 g/10min), 45 parts by weight of polyolefin elastomer (the mass ratio of PP and EPDM was 90: 10; and the mass ratio of a polyolefin elastomer having a shore hardness A of 80 and a polyolefin elastomer having a shore hardness D of 30 was 8:2) and 30 parts by weight of low-density polyethylene (the melt flow rate was 0.5 g/10 min) and 8 parts by weight of ethylene-vinyl acetate copolymer (the MFR was 2 g/10 min) were stirred in a high speed homogenizer, then 0.5 parts by weight of TMPTA and 1 part by weight of silicon dioxide were added in and stirred evenly. Then the materials were preliminary melt in an internal mixer, refined in a two roll rubber mill, filtered, transferred into a flattening roller, and flattened to form a membrane at 170°C. Finally, the membrane was subjected to low energy electron beam radiation (the energy was 250 kV, and the radiation dose was 40 kGy) to obtain a polypropylene membrane.

The performances of polypropylene membrane obtained in Example 13 were tested, and the results were shown in Table 1.

### Example 14 (according to the claimed invention)

35 parts by weight of polypropylene(the melt flow rate was 3.8 g/10min), 20 parts by weight of polyolefin elastomer (the mass ratio of PP and EPDM was 90: 10; and the mass ratio of a polyolefin elastomer having a shore hardness A of 90 and a polyolefin elastomer having a shore hardness D of 50 was 8:2) and 45 parts by weight of low-density polyethylene (the melt flow rate was 5 g/10 min) and 4 parts by weight of ethylene-vinyl acetate copolymer (the MFR was 4 g/10 min) were stirred in a high speed homogenizer, then 0.5 parts by weight of TMPTA, 0.5 parts by weight of silicon dioxide and 1 part by weight of calcium carbonate were added in and stirred evenly. Then the materials were preliminary melt in an internal mixer, refined in a two roll rubber mill, filtered, transferred into a flattening roller, and flattened to form a membrane at 170°C. Finally, the membrane was subjected to low energy electron beam radiation (the energy was 250 kV, and the radiation dose was 40 kGy) to obtain a polypropylene membrane.

The performances of polypropylene membrane obtained in Example 14 were tested, and the results were shown in Table 1.

### Example 15 (according to the claimed invention)

35 parts by weight of polypropylene(the melt flow rate was 5.0 g/10min), 35 parts by weight of polyolefin elastomer (the mass ratio of PP and EPDM was 90: 10; and the mass ratio of a polyolefin elastomer having a shore hardness A of 90 and a polyolefin elastomer having a shore hardness D of 30 was 7:3) and 30 parts by weight of low-density polyethylene (the melt flow rate was 10 g/10 min) and 4 parts by weight of ethylene-vinyl acetate copolymer (the MFR was 4 g/10 min) were stirred in a high speed homogenizer; then 0.5 parts by weight of TMPTA, 0.5 parts by weight of silicon dioxide and 6 parts by weight of calcium carbonate were added in and stirred evenly. Then the materials were preliminary melt in an internal mixer, refined in a two roll rubber mill, filtered, transferred into a flattening roller, and flattened to form a membrane at 170°C. Finally, the membrane was subjected to low energy electron beam radiation (the energy was 250 kV, and the radiation dose was 40 kGy) to obtain a polypropylene membrane.

The performances of polypropylene membrane obtained in Example 15 were tested, and the results were shown in Table 1.

### Example 16 (according to the claimed invention)

45 parts by weight of polypropylene(the melt flow rate was 5.0 g/10min), 20 parts by weight of polyolefin elastomer (the mass ratio of PP and EPDM was 90:10; and the mass ratio of a polyolefin elastomer having a shore hardness A of 70 and a polyolefin elastomer having a shore hardness D of 50 was 7:3) and 35 parts by weight of low-density polyethylene (the melt flow rate was 5 g/10 min) and 1 parts by weight of ethylene-vinyl acetate copolymer (the MFR was 4 g/10 min) were stirred in a high speed homogenizer; then0.5 parts by weight of TMPTA, 0.5 parts by weight of silicon dioxide and 10 parts by weight of calcium carbonate were added in and stirred evenly. Then the materials were preliminary melt in an internal mixer, refined in a two roll rubber mill, filtered, transferred into a flattening roller, and flattened to form a membrane at 170°C. Finally, the membrane was subjected to low energy electron beam radiation (the energy was 250 kV, and the radiation dose was 40 kGy) to obtain a polypropylene membrane.

The performances of polypropylene membrane obtained in Example 16 were tested, and the results were shown in Table 1.

### Example 17 (according to the claimed invention)

45 parts by weight of polypropylene(the melt flow rate was 5.0 g/10min), 25 parts by weight of polyolefin elastomer (the mass ratio of PP and EPDM was 90:10; and the mass ratio of a polyolefin elastomer having a shore hardness A of 80 and a polyolefin elastomer having a shore hardness D of 50 was 7:3) and 30 parts by weight of low-density polyethylene (the melt flow rate was 0.5 g/10 min) and 2 parts by weight of ethylene-vinyl acetate copolymer (the MFR was 2 g/10 min) were stirred in a high speed homogenizer; then 0.5 parts by weight of TMPTA, 0.5 parts by weight of silicon dioxide, 2 parts by weight of calcium carbonate and 0.1 parts by weight of light stabilizer 622 were added in and stirred evenly. Then the materials were preliminary melt in an internal mixer, refined in a two roll rubber mill, filtered, transferred into a flattening roller, and flattened to form a membrane at 170°C. Finally, the membrane was subjected to low energy electron beam radiation (the energy was 250 kV, and the radiation dose was 40 kGy) to obtain a polypropylene membrane.

The performances of polypropylene membrane obtained in Example 17 were tested, and the results were shown in Table 1.

### Example 18 (according to the claimed invention)

25 parts by weight of polypropylene(the melt flow rate was 5.0 g/10min), 45 parts by weight of polyolefin elastomer (the mass ratio of PP and EPDM was 90:10; and the mass ratio of a polyolefin elastomer having a shore hardness A of 80 and a polyolefin elastomer having a shore hardness D of 50 was 7:3) and 30 parts by weight of low-density polyethylene (the melt flow rate was 0.5 g/10 min) and 1 parts by weight of ethylene-vinyl acetate copolymer (the MFR was 0.5 g/10 min) were stirred in a high speed homogenizer; then 0.5 parts by weight of TMPTA, 0.5 parts by weight of silicon dioxide, 2 parts by weight of calcium carbonate and 1 parts by weight of light stabilizer 622 were added in and stirred evenly. Then the materials were preliminary melt in an internal mixer, refined in a two roll rubber mill, filtered, transferred into a flattening roller, and flattened to form a membrane at 170°C. Finally, the membrane was subjected to low energy electron beam radiation (the energy was 250 kV, and the radiation dose was 40 kGy) to obtain a polypropylene membrane.

The performances of polypropylene membrane obtained in Example 18 were tested, and the results were shown in Table 1.

### Example 19 (according to the claimed invention)

25 parts by weight of polypropylene(the melt flow rate was 5.0 g/10min), 45 parts by weight of polyolefin elastomer (the mass ratio of PP and EPDM was 90: 10; and the mass ratio of a polyolefin elastomer having a shore hardness A of 60 and a polyolefin elastomer having a shore hardness D of 50 was 7:3) and 30 parts by weight of low-density polyethylene (the melt flow rate was 0.5 g/10 min) and 6 parts by weight of ethylene-vinyl acetate copolymer (the MFR was 2 g/10 min) were stirred in a high speed homogenizer; then0.5 parts by weight of TMPTA, 0.5 parts by weight of silicon dioxide, 2 parts by weight of calcium carbonate, 0.4 parts by weight of light stabilizer 622 and 0.2 parts by weight of calcium stearate were added in and stirred evenly. Then the materials were preliminary melt in an internal mixer, refined in a two roll rubber mill, filtered, transferred into a flattening roller, and flattened to form a membrane at 170°C. Finally, the membrane was subjected to low energy electron beam radiation (the energy was 250 kV, and the radiation dose was 40 kGy) to obtain a polypropylene membrane.

The performances of polypropylene membrane obtained in Example 19 were tested, and the results were shown in Table 1.

### Example 20 (according to the claimed invention)

25 parts by weight of polypropylene(the melt flow rate was 5.0 g/10min), 45 parts by weight of polyolefin elastomer (the mass ratio of PP and EPDM was 90: 10; and the mass ratio of a polyolefin elastomer having a shore hardness A of 70 and a polyolefin elastomer having a shore hardness D of 25 was 7:3) and 30 parts by weight of low-density polyethylene (the melt flow rate was 0.5 g/10 min) and 6 parts by weight of ethylene-vinyl acetate copolymer (the MFR was 2 g/10 min) were stirred in a high speed homogenizer; then 0.5 parts by weight of TMPTA, 0.5 parts by weight of silicon dioxide, 2 parts by weight of calcium carbonate, 0.4 parts by weight of light stabilizer 622 and 1.8 parts by weight of calcium stearate were added in and stirred evenly. Then the materials were preliminary melt in an internal mixer, refined in a two roll rubber mill, filtered, transferred into a flattening roller, and flattened to form a membrane at 170°C. Finally, the membrane was subjected to low energy electron beam radiation (the energy was 250 kV, and the radiation dose was 100 kGy) to obtain a polypropylene membrane.

The performances of polypropylene membrane obtained in Example 20 were tested, and the results were shown in Table 1.

### Example 21 (according to the claimed invention)

25 parts by weight of polypropylene(the melt flow rate was 5.0 g/10min), 45 parts by weight of polyolefin elastomer (the mass ratio of PP and EPDM was 90: 10; and the mass ratio of a polyolefin elastomer having a shore hardness A of 70 and a polyolefin elastomer having a shore hardness D of 25 was 7:3) and 30 parts by weight of low-density polyethylene (the melt flow rate was 0.5 g/10 min) and 6 parts by weight of ethylene-vinyl acetate copolymer (the MFR was 2 g/10 min) were stirred in a high speed homogenizer; then 0.5 parts by weight of TMPTA, 0.5 parts by weight of silicon dioxide, 2 parts by weight of calcium carbonate, 0.4 parts by weight of light stabilizer 622, 0.4 parts by weight of calcium stearate and 0.3 parts by weight of high-molecular-weight organosilicon were added in and stirred evenly. Then the materials were preliminary melt in an internal mixer, refined in a two roll rubber mill, filtered, transferred into a flattening roller, and flattened to form a membrane at 170°C. Finally, the membrane was subjected to low energy electron beam radiation (the energy was 250 kV, and the radiation dose was 40 kGy) to obtain a polypropylene membrane.

The performances of polypropylene membrane obtained in Example 21 were tested, and the results were shown in Table 1.

### Example 22 (according to the claimed invention)

25 parts by weight of polypropylene(the melt flow rate was 5.0 g/10min), 45 parts by weight of polyolefin elastomer (the mass ratio of PP and EPDM was 90: 10; and the mass ratio of a polyolefin elastomer having a shore hardness A of 80 and a polyolefin elastomer having a shore hardness D of 30 was 7:3) and 30 parts by weight of low-density polyethylene (the melt flow rate was 0.5 g/10 min) and 8 parts by weight of ethylene-vinyl acetate copolymer (the MFR was 2 g/10 min) were stirred in a high speed homogenizer; then 0.5 parts by weight of TMPTA, 0.5 parts by weight of silicon dioxide, 2 parts by weight of calcium carbonate, 0.4 parts by weight of light stabilizer 622, 0.8 parts by weight of calcium stearate and 1.5 parts by weight of high-molecular-weight organosilicon were added in and stirred evenly. Then the materials were preliminary melt in an internal mixer, refined in a two roll rubber mill, filtered, transferred into a flattening roller, and flattened to form a membrane at 170°C. Finally, the membrane was subjected to low energy electron beam radiation (the energy was 250 kV, and the radiation dose was 60 kGy) to obtain a polypropylene membrane.

The performances of polypropylene membrane obtained in Example 22 were tested, and the results were shown in Table 1.

### Example 23 (according to the claimed invention)

25 parts by weight of polypropylene(the melt flow rate was 5.0 g/10min), 25 parts by weight of polyolefin elastomer (the mass ratio of PP and EPDM was 90:10 , the mass ratio of a polyolefin elastomer having a shore hardness A of 80 and a polyolefin elastomer having a shore hardness D of 30 was 7:2) and 30 parts by weight of low-density polyethylene (the melt flow rate was 0.5 g/10 min) and 6 parts by weight of ethylene-vinyl acetate copolymer (the MFR was 2 g/10 min) were stirred in a high speed homogenizer; 0.5 parts by weight of TMPTA, 0.5 parts by weight of silicon dioxide, 2 parts by weight of calcium carbonate, 0.4 parts by weight of light stabilizer 622, 1 parts by weight of calcium stearate and 0.5 parts by weight of high-molecular-weight organosilicon were added in and stirred evenly. Then the materials were preliminary melt in an internal mixer, refined in a two roll rubber mill, filtered, transferred into a flattening roller, and flattened to form a membrane at 170°C. Finally, the membrane was subjected to low energy electron beam radiation (the energy was 250 kV, and the radiation dose was 80 kGy) to obtain a polypropylene membrane.

The performances of polypropylene membrane obtained in Example 23 were tested, and the results were shown in Table 1.

### Example 24 (according to the claimed invention)

25 parts by weight of polypropylene(the melt flow rate was 5.0 g/10min), 35 parts by weight of polyolefin elastomer (the mass ratio of PP and EPDM was 90:10), 30 parts by weight of low-density polyethylene (the melt flow rate was 0.5 g/10 min) and 4 parts by weight of ethylene-vinyl acetate copolymer (the MFR was 4 g/10 min) were stirred in a high speed homogenizer; then 0.5 parts by weight of TMPTA, 0.5 parts by weight of silicon dioxide, 2 parts by weight of calcium carbonate, 0.4 parts by weight of light stabilizer 622, 0.8 parts by weight of calcium stearate and 1 parts by weight of high-molecular-weight organosilicon were added in and stirred evenly. Then the materials were preliminary melt in an internal mixer, refined in a two roll rubber mill, filtered, transferred into a flattening roller, and flattened to form a membrane at 170°C. Finally, the membrane was subjected to low energy electron beam radiation (the energy was 250 kV, and the radiation dose was 60 kGy) to obtain a polypropylene membrane.

The performances of polypropylene membrane obtained in Example 24 were tested, and the results were shown in Table 1.

### Comparative Example 1

15 parts by weight of polypropylene(the melt flow rate was 5.0 g/10min), 25 parts by weight of polyolefin elastomer (the mass ratio of PP and EPDM was 90:10; and the mass ratio of a polyolefin elastomer having a shore hardness A of 60 and a polyolefin elastomer having a shore hardness D of 25 was 7:3) and 61 parts by weight of low-density polyethylene (the melt flow rate was 0.5 g/10 min) were stirred in a high speed homogenizer; 0.5 parts by weight of TMPTA was added in and stirred evenly. Then the materials were preliminary melt in an internal mixer, refined in a two roll rubber mill, filtered, transferred into a flattening roller, and flattened to form a membrane at 170°C. Finally, the membrane was subjected to low energy electron beam radiation (the energy was 250 kV, and the radiation dose was 40 kGy) to obtain a polypropylene membrane.

The performances of polypropylene membrane obtained in Comparative Example 1 were tested, and the results were shown in Table 1.

### Comparative Example 2

60 parts by weight of polypropylene(the melt flow rate was 5.0 g/10min), 20 parts by weight of polyolefin elastomer (the mass ratio of PP and EPDM was 90:10; and the mass ratio of a polyolefin elastomer having a shore hardness A of 60 and a polyolefin elastomer having a shore hardness D of 25 was 7:3) and 20 parts by weight of low-density polyethylene (the melt flow rate was 0.5 g/10 min) were stirred in a high speed homogenizer; 0.5 parts by weight of TMPTA was added in and stirred evenly. Then the materials were preliminary melt in an internal mixer, refined in a two roll rubber mill, filtered, transferred into a flattening roller, and flattened to form a membrane at 170°C. Finally, the membrane was subjected to low energy electron beam radiation (the energy was 250 kV, and the radiation dose was 40 kGy) to obtain a polypropylene membrane.

The performances of polypropylene membrane obtained in Comparative Example 2 were tested, and the results were shown in Table 1.

### Comparative Example 3

20 parts by weight of polypropylene(the melt flow rate was 5.0 g/10min), 19 parts by weight of polyolefin elastomer (the mass ratio of PP and EPDM was 90:10; and the mass ratio of a polyolefin elastomer having a shore hardness A of 60 and a polyolefin elastomer having a shore hardness D of 25 was 7:3) and 61 parts by weight of low-density polyethylene (the melt flow rate was 0.5 g/10 min) were stirred in a high speed homogenizer; 0.5 parts by weight of TMPTA was added in and stirred evenly. Then the materials were preliminary melt in an internal mixer, refined in a two roll rubber mill, filtered, transferred into a flattening roller, and flattened to form a membrane at 170°C. Finally, the membrane was subjected to low energy electron beam radiation (the energy was 250 kV, and the radiation dose was 40 kGy) to obtain a polypropylene membrane.

The performances of polypropylene membrane obtained in Comparative Example 3 were tested, and the results were shown in Table 1.

### Comparative Example 4

20 parts by weight of polypropylene(the melt flow rate was 5.0 g/10min), 50 parts by weight of polyolefin elastomer (the mass ratio of PP and EPDM was 90:10; and the mass ratio of a polyolefin elastomer having a shore hardness A of 60 and a polyolefin elastomer having a shore hardness D of 25 was 7:3) and 30 parts by weight of low-density polyethylene (the melt flow rate was 0.5 g/10 min) were stirred in a high speed homogenizer; 0.5 parts by weight of TMPTA was added in and stirred evenly. Then the materials were preliminary melt in an internal mixer, refined in a two roll rubber mill, filtered, transferred into a flattening roller, and flattened to form a membrane at 170°C. Finally, the membrane was subjected to low energy electron beam radiation (the energy was 250 kV, and the radiation dose was 40 kGy) to obtain a polypropylene membrane.

The performances of polypropylene membrane obtained in Comparative Example 4 were tested, and the results were shown in Table 1.

### Comparative Example 5

50 parts by weight of polypropylene(the melt flow rate was 5.0 g/10min), 25 parts by weight of polyolefin elastomer (the mass ratio of PP and EPDM was 90:10; and the mass ratio of a polyolefin elastomer having a shore hardness A of 60 and a polyolefin elastomer having a shore hardness D of 25 was 7:3) and 25 parts by weight of low-density polyethylene (the melt flow rate was 0.5 g/10 min) were stirred in a high speed homogenizer; 0.5 parts by weight of TMPTA was added in and stirred evenly. Then the materials were preliminary melt in an internal mixer, refined in a two roll rubber mill, filtered, transferred into a flattening roller, and flattened to form a membrane at 170°C. Finally, the membrane was subjected to low energy electron beam radiation (the energy was 250 kV, and the radiation dose was 40 kGy) to obtain a polypropylene membrane.

The performances of polypropylene membrane obtained in Comparative Example 5 were tested, and the results were shown in Table 1.

### Comparative Example 6

20 parts by weight of polypropylene(the melt flow rate was 5.0 g/10min), 20 parts by weight of polyolefin elastomer (the mass ratio of PP and EPDM was 90:10; and the mass ratio of a polyolefin elastomer having a shore hardness A of 60 and a polyolefin elastomer having a shore hardness D of 25 was 7:3) and 60 parts by weight of low-density polyethylene (the melt flow rate was 0.5 g/10 min) were stirred in a high speed homogenizer; 0.4 parts by weight of TMPTA was added in and stirred evenly. Then the materials were preliminary melt in an internal mixer, refined in a two roll rubber mill, filtered, transferred into a flattening roller, and flattened to form a membrane at 170°C. Finally, the membrane was subjected to low energy electron beam radiation (the energy was 250 kV, and the radiation dose was 40 kGy) to obtain a polypropylene membrane.

The performances of polypropylene membrane obtained in Comparative Example 6 were tested, and the results were shown in Table 1.

### Comparative Example 7

20 parts by weight of polypropylene(the melt flow rate was 5.0 g/10min), 20 parts by weight of polyolefin elastomer (the mass ratio of PP and EPDM was 90:10; and the mass ratio of a polyolefin elastomer having a shore hardness A of 60 and a polyolefin elastomer having a shore hardness D of 25 was 7:3) and 60 parts by weight of low-density polyethylene (the melt flow rate was 0.5 g/10 min) were stirred in a high speed homogenizer; 11 parts by weight of TMPTA was added in and stirred evenly. Then the materials were preliminary melt in an internal mixer, refined in a two roll rubber mill, filtered, transferred into a flattening roller, and flattened to form a membrane at 170°C. Finally, the membrane was subjected to low energy electron beam radiation (the energy was 250 kV, and the radiation dose was 40 kGy) to obtain a polypropylene membrane.

The performances of polypropylene membrane obtained in Comparative Example 7 were tested, and the results were shown in Table 1.

### Comparative Example 8

20 parts by weight of polypropylene(the melt flow rate was 5.0 g/10min), 20 parts by weight of polyolefin elastomer (the mass ratio of PP and EPDM was 90:10; and the mass ratio of a polyolefin elastomer having a shore hardness A of 60 and a polyolefin elastomer having a shore hardness D of 25 was 7:3) and 60 parts by weight of low-density polyethylene (the melt flow rate was 0.5 g/10 min) were stirred in a high speed homogenizer; 0.5 parts by weight of TMPTA was added in and stirred evenly. Then the materials were preliminary melt in an internal mixer, refined in a two roll rubber mill, filtered, transferred into a flattening roller, and flattened to form a membrane at 170°C. Finally, the membrane was subjected to low energy electron beam radiation (the energy was 250 kV, and the radiation dose was 39 kGy) to obtain a polypropylene membrane.

The performances of polypropylene membrane obtained in Comparative Example 8 were tested, and the results were shown in Table 1.

### Comparative Example 9

20 parts by weight of polypropylene(the melt flow rate was 5.0 g/10min), 20 parts by weight of polyolefin elastomer (the mass ratio of PP and EPDM was 90:10; and the mass ratio of a polyolefin elastomer having a shore hardness A of 60 and a polyolefin elastomer having a shore hardness D of 25 was 7:3) and 60 parts by weight of low-density polyethylene (the melt flow rate was 0.5 g/10 min) were stirred in a high speed homogenizer; 0.5 parts by weight of TMPTA was added in and stirred evenly. Then the materials were preliminary melt in an internal mixer, refined in a two roll rubber mill, filtered, transferred into a flattening roller, and flattened to form a membrane at 170°C. Finally, the membrane was subjected to low energy electron beam radiation (the energy was 250 kV, and the radiation dose was 101 kGy) to obtain a polypropylene membrane.

The performances of polypropylene membrane obtained in Comparative Example 9 were tested, and the results were shown in Table 1.

**Table 1 Performances of 1 polypropylene membrane**

| | Tensile strength MPa | Elongation at break % | Vacuum forming temperature °C | Rupture or not during high-temperature vacuum forming |
|---|---|---|---|---|
| Example 1 | 27 | 769 | 130 | Not |
| Example 2 | 28 | 788 | 134 | Not |
| Example 3 | 31 | 821 | 137 | Not |
| Example 4 | 31 | 815 | 140 | Not |
| Example 5 | 30 | 746 | 135 | Not |
| Example 6 | 31 | 806 | 138 | Not |
| Example 7 | 32 | 773 | 137 | Not |
| Example 8 | 32 | 782 | 141 | Not |
| Example 9 | 33 | 765 | 144 | Not |
| Example 10 | 27 | 771 | 130 | Not |
| Example 11 | 28 | 799 | 133 | Not |
| Example 12 | 31 | 834 | 135 | Not |
| Example 13 | 31 | 831 | 138 | Not |
| Example 14 | 30 | 828 | 133 | Not |
| Example 15 | 31 | 817 | 137 | Not |
| Example 16 | 32 | 779 | 137 | Not |
| Example 17 | 32 | 793 | 140 | Not |
| Example 18 | 31 | 819 | 140 | Not |
| Example 19 | 31 | 836 | 138 | Not |
| Example 20 | 33 | 847 | 141 | Not |
| Example 21 | 32 | 841 | 139 | Not |
| Example 22 | 31 | 840 | 137 | Not |
| Example 23 | 29 | 805 | 136 | Not |
| Example 24 | 29 | 814 | 137 | Not |
| Comparative Example 1 | 20 | 745 | 128 | Not |
| Comparative Example 2 | 37 | 726 | 160 | Not |
| Comparative Example 3 | 24 | 731 | 125 | Not |
| Comparative Example 4 | 30 | 845 | 155 | Not |
| Comparative Example 5 | 38 | 759 | 163 | Not |
| Comparative Example 6 | 23 | 742 | 123 | Yes |
| Comparative Example 7 | 20 | 721 | 152 | Not |
| Comparative Example 8 | 25 | 741 | 122 | Yes |
| Comparative Example 9 | 19 | 621 | 132 | Yes |

It can be concluded from Table 1 that all the tensile strength of the polypropylene membrane provided by the present invention is not lower than 27Mpa, and is moderate. The vacuum forming temperatures are between 130 and 145°C, which comply with the requirements of downstream customers. The comparative examples, however, due to the formulation of the ingredients are not in an appropriate scope, or the radiation dose is unduly large or small, the vacuum forming temperature of the polypropylene membrane is unduly high or the strength unduly low, and even the excessively large amount of radiation dose may lead to the problem of degradation and lower strength.

The first polypropylene membrane (0.23 mm) and the second polypropylene membrane (0.04 mm) were prepared by the method in Example 22; and the second polypropylene membrane (0.04mm) was prepared without subjecting to radiation.

Thermoset adhesive was coated (EC-1385) on one side of the first polypropylene membrane with a wet coated weight of 15g/m².

The other side of the polypropylene membrane was subjected to a pre-treating process of corona, and then coated with the first coating layer (LS-13-212, and the wet coated weight was 7g/m²). After the coating, the product was dried at 45°C.

### The first coating layer was printed by ink, dried at 45°C to obtain a printing layer.

The second coating layer was coated on the printing layer (LS-13-212, and the wet coated weight was 7g/m²). Then a second polypropylene membrane (both sides of which were subjected to corona surface treatment) was pasted on the second coating layer, and dried at 45°C.

The second polypropylene membrane after the corona surface treatment was coated with a polyurethane coating (EVO SU-422, and the wet coated weight was 10g/m²) to obtain the composite membrane.

The composite membrane was subjected to low energy electron beam radiation (the energy was 250 kV, the radiation dose was 80 kGy) to obtain a polypropylene composite membrane.

The performances of the polypropylene composite membrane obtained in Example 26 were tested, and the results were shown in Table 2.

The polypropylene composite membrane obtained in Example 25 were subjected to vacuum forming with a plank, and the membrane after the vacuum forming did not rupture, the details did not become shallow and the membrane did not turned white.

### Example 26

The first polypropylene membrane (0.23 mm) and the second polypropylene membrane (0.04 mm) were prepared by the method in Example 20; and the second polypropylene membrane (0.04mm) was prepared without subjecting to radiation.

Thermoset adhesive was coated (EC-1385) on one side of the first polypropylene membrane with a wet coated weight of 15g/m².

The other side of the polypropylene membrane was subjected to a pre-treating process of corona, and then coated with the first coating layer (LS-13-212, and the wet coated weight was 7g/m²). After the coating, the product was dried at 45°C.

The first coating layer was printed by ink, dried at 45°C to obtain a printing layer.

The second coating layer was coated on the printing layer (LS-13-212, and the wet coated weight was 7g/m2). Then a second polypropylene membrane (both sides of which were subjected to corona surface treatment) was pasted on the second coating layer, and dried at 45°C.

The second polypropylene membrane after the corona surface treatment was coated with a polyurethane coating (EVO SU-422, and the wet coated weight was 10g/m²) to obtain the composite membrane.

The composite membrane was subjected to low energy electron beam radiation (the energy was 250 kV, the radiation dose was 80 kGy) to obtain a polypropylene composite membrane.

The performances of the polypropylene composite membrane obtained in Example 26 were tested, and the results were shown in Table 2.

The polypropylene composite membrane obtained in Example 26 were subjected to vacuum forming with a plank, and the membrane after the vacuum forming did not rupture, the details did not become shallow and the membrane did not turned white.

### Example 27

The first polypropylene membrane (0.23 mm) and the second polypropylene membrane (0.04 mm) were prepared by the method in Example 18; and the second polypropylene membrane (0.04mm) was prepared without subjecting to radiation.

Thermoset adhesive was coated (EC-1385) on one side of the first polypropylene membrane with a wet coated weight of 15g/m².

The other side of the polypropylene membrane was subjected to a pre-treating process of corona, and then coated with the first coating layer (LS-13-212, and the wet coated weight was 7g/m²). After the coating, the product was dried at 45°C.

The first coating layer was printed by ink, dried at 45°C to obtain a printing layer.

The second coating layer was coated on the printing layer (LS-13-212, and the wet coated weight was 7g/m2). Then a second polypropylene membrane (both sides of which were subjected to corona surface treatment) was pasted on the second coating layer, and dried at 45°C.

The second polypropylene membrane after the corona surface treatment was coated with a polyurethane coating (EVO SU-422, and the wet coated weight was 10g/m²) to obtain the composite membrane.

The composite membrane was subjected to low energy electron beam radiation (the energy was 250 kV, the radiation dose was 80 kGy) to obtain a polypropylene composite membrane.

The performances of the polypropylene composite membrane obtained in Example 27 were tested, and the results were shown in Table 2.

The polypropylene composite membrane obtained in Example 27 were subjected to vacuum forming with a plank, and the membrane after the vacuum forming did not rupture, the details did not become shallow and the membrane did not turned white.

**Table 2 Performances of polypropylene composite membrane**

| | tensile strength MPa | Elongation at break % | vacuum forming temperature °C |
|---|---|---|---|
| Example 25 | 32 | 851 | 138 |
| Example 26 | 32 | 842 | 137 |
| Example 27 | 32 | 826 | 142 |

## Claims

1. A polypropylene membrane, which is formed by a method comprising the steps of mixing of raw materials, film formation, and radiation modification, wherein the raw materials comprise:
| | |
|---|---|
| polypropylene | 20-50 parts by weight; |
| polyolefin elastomer | 20-45 parts by weight; |
| polyethylene | 30-60 parts by weight; |
| ethylene-vinyl acetate copolymer | 1-8 parts by weight; |
| cross-linking agent | 0.5-10 parts by weight; and |
| silicon dioxide | 0-1 parts by weight; |
wherein the polyolefin elastomer, also called polyolefin thermoplastic elastomer (TPO), is a two-phase separated polymer mixture composed of rubber and polyolefin resin, wherein the rubber is any one selected from a group consisting of ethylene propylene diene monomer rubber (EPDM), nitrile-butadiene rubber (NBR) and butyl rubber (IIR), or a mixture thereof.

2. The polypropylene membrane according to claim 1, wherein the raw materials further comprise 1-10 parts by weight of calcium carbonate.

3. The polypropylene membrane according to claim 1, wherein the raw materials further comprise 0.1-1 parts by weight of a stabilizer; and the stabilizer is selected from hindered amine light stabilizer and/or anti-ultraviolet agent.

4. The polypropylene membrane according to claim 1, wherein the raw materials further comprise 0.2-1.8 parts by weight of an external lubricant; and the external lubricant is selected from a group consisting of metal soap lubricants and/or fatty acid salt lubricants.

5. The polypropylene membrane according to claim 1, wherein the raw materials further comprise 0.3-1.5 parts by weight of high-molecular-weight organosilicon.

6. A polypropylene composite membrane, which is made by subjecting a composite membrane to radiation administration, and the composite membrane comprises following layers in order,
a first polypropylene membrane;
a first coating layer;
a printing layer;
a second coating layer;
a second polypropylene membrane; and
a polyurethane coating;
wherein the first polypropylene membrane is the polypropylene membrane of claim 1, and
the first coating layer and the second coating layer are independently selected from a chlorinated polypropylene coating or a reactive polyurethane coating.

7. The polypropylene composite membrane according to claim 6, wherein a glue coating is disposed on one side, to which is not contact with the first coating layer, of the first polypropylene membrane.

8. The polypropylene composite membrane according to claim 6, wherein a third coating layer is disposed between the second polypropylene membrane and the polyurethane coating; and the third coating layer is a chlorinated polypropylene coating or a reactive polyurethane coating.

9. The polypropylene composite membrane according to claim 6, wherein the second polypropylene membrane is the polypropylene membrane of claim 1

10. The polypropylene membrane according to any one of claims 1-5, wherein the radiation modification is carried out at a radiation dose between 40-100 kGy.

11. The polypropylene composite membrane according to any one of claims 6-9, wherein the radiation administration has a radiation dose between 40-100 kGy.

## Patentansprüche

1. Polypropylenmembran, die durch ein Verfahren gebildet wird, umfassend die Schritte eines Mischens von Rohstoffen, Folienbildung und Strahlungsmodifikation, wobei die Rohstoffe Folgendes umfassen:
| | |
|---|---|
| Polypropylen | 20-50 Gewichtsanteile; |
| Polyolefinelastomer | 20-45 Gewichtsanteile; |
| Polyethylen | 30-60 Gewichtsanteile; |
| Ethylen-Vinylacetat-Copolymer | 1-8 Gewichtsanteile; |
| Vernetzungsmittel | 0,5-10 Gewichtsanteile; und |
| Siliciumdioxid | 0-1 Gewichtsanteile; |
wobei das Polyolefinelastomer, auch bezeichnet als thermoplastisches Polyolefinelastomer (TPO), ein zweiphasiges separates Polymergemisch ist, das aus Kautschuk und Polyolefinharz besteht, wobei der Kautschuk ein beliebiger ist, der ausgewählt ist aus einer Gruppe, bestehend aus Ethylen-Propylen-Dien-Monomer-Kautschuk (EPDM), Nitril-Butadien-Kautschuk (NBR) und Butyl-Kautschuk (IIR) oder einem Gemisch davon besteht.

2. Polypropylenmembran nach Anspruch 1, wobei die Rohstoffe außerdem 1-10 Gewichtsanteile Calciumcarbonat umfassen.

3. Polypropylenmembran nach Anspruch 1, wobei die Rohstoffe ferner 0,1-1 Gewichtsanteile eines Stabilisators umfassen und der Stabilisator ausgewählt ist aus einem gehinderten Amin-Lichtstabilisator und/oder einem Anti-Ultraviolettmittel.

4. Polypropylenmembran nach Anspruch 1, wobei die Rohstoffe ferner 0,2-1,8 Gewichtsanteile eines externen Schmiermittels umfassen; und das externe Schmiermittel ausgewählt ist aus einer Gruppe, bestehend aus Metallseifenschmiermitteln und/oder Fettsäuresalzschmiermitteln.

5. Polypropylenmembran nach Anspruch 1, wobei die Rohstoffe ferner 0,3-1,5 Gewichtsanteile hochmolekulares Organosilicium umfassen.

6. Polypropylenverbundmembran, die hergestellt wird, indem eine Verbundmembran einer Strahlungsverabreichung unterzogen wird, und die Verbundmembran folgende Schichten in dieser Reihenfolge umfasst
eine erste Polypropylenmembran;
eine erste Beschichtungsschicht;
eine Druckschicht;
eine zweite Beschichtungsschicht;
eine zweite Polypropylenmembran; und
eine Polyurethanbeschichtung;
wobei die erste Polypropylenmembran die Polypropylenmembran nach Anspruch 1 ist, und die erste Beschichtungsschicht und die zweite Beschichtungsschicht unabhängig ausgewählt sind aus einer chlorierten Polypropylenbeschichtung oder einer reaktiven Polyurethanbeschichtung.

7. Polypropylenverbundmembran nach Anspruch 6, wobei auf einer Seite der ersten Polypropylenmembran, die nicht mit der ersten Beschichtungsschicht in Kontakt ist, eine Kleberbeschichtung angeordnet ist.

8. Polypropylenverbundmembran nach Anspruch 6, wobei eine dritte Beschichtungsschicht zwischen der zweiten Polypropylenmembran und der Polyurethanbeschichtung angeordnet ist; und die dritte Beschichtungsschicht eine chlorierte Polypropylenbeschichtung oder eine reaktive Polyurethanbeschichtung ist.

9. Polypropylenverbundmembran nach Anspruch 6, wobei die zweite Polypropylenmembran die Polypropylenmembran nach Anspruch 1 ist.

10. Polypropylenmembran nach einem der Ansprüche 1-5, wobei die Strahlungsmodifikation mit einer Strahlendosis zwischen 40-100 kGy durchgeführt wird.

11. Polypropylenverbundmembran nach einem der Ansprüche 6-9, wobei die Strahlungsverabreichung eine Strahlungsdosis zwischen 40-100 kGy aufweist.

## Revendications

1. Membrane de polypropylène, qui est formée par un procédé comprenant les étapes de mélange de matières premières, de formation d'un film et de modification de rayonnement, dans laquelle les matières premières comprennent :
| | |
|---|---|
| du polypropylene en | 20 à 50 parties en poids ; |
| de l'élastomère polyolefine en | 20 à 45 parties en poids ; |
| du polyéthylène en | 30 à 60 parties en poids ; |
| du copolymère éthylène-acétate de vinyle en | 1 à 8 parties en poids ; |
| un agent de réticulation en | 0,5 à 10 parties en poids ; et |
| du dioxyde de silicium en | 0 à 1 partie en poids ; |
dans laquelle l'élastomère de polyoléfine, également appelé élastomère thermoplastique de polyoléfine (TPO), est un mélange polymère séparé en deux phases composé de caoutchouc et de résine de polyoléfine, dans laquelle le caoutchouc est l'un quelconque choisi dans un groupe constitué par le caoutchouc de monomère d'éthylène-propylène-diène (EPDM), le caoutchouc de nitrile-butadiène (NBR) et le caoutchouc de butyle (IIR), ou un mélange de ceux-ci.

2. Membrane de polypropylène selon la revendication 1, dans laquelle les matières premières comprennent en outre 1 à 10 parties en poids de carbonate de calcium.

3. Membrane de polypropylène selon la revendication 1, dans laquelle les matières premières comprennent en outre 0,1 à 1 partie en poids d'un stabilisateur ; et le stabilisateur est choisi parmi un stabilisateur de lumière à base d'amine encombrée et/ou un agent anti-ultraviolet.

4. Membrane de polypropylène selon la revendication 1, dans laquelle les matières premières comprennent en outre 0,2 à 1,8 partie en poids d'un lubrifiant externe ; et le lubrifiant externe est choisi dans un groupe constitué par les lubrifiants à base de savon métallique et/ou les lubrifiants à base de sel d'acide gras.

5. Membrane de polypropylène selon la revendication 1, dans laquelle les matières premières comprennent en outre 0,3 à 1,5 partie en poids d'organosilicium de poids moléculaire élevé.

6. Membrane composite de polypropylène, qui est fabriquée en soumettant une membrane composite à une administration de rayonnement, et la membrane composite comprend les couches suivantes dans l'ordre,
une première membrane de polypropylène ;
une première couche de revêtement ;
une couche d'impression ;
une deuxième couche de revêtement ;
une seconde membrane de polypropylène ; et
un revêtement de polyuréthane ;
dans lequel la première membrane de polypropylène est la membrane de polypropylène de la revendication 1, et
la première couche de revêtement et la deuxième couche de revêtement sont indépendamment choisies parmi un revêtement de polypropylène chloré ou un revêtement de polyuréthane réactif.

7. Membrane composite de polypropylène selon la revendication 6, dans laquelle un revêtement de colle est disposé d'un côté, lequel n'est pas en contact avec la première couche de revêtement, de la première membrane de polypropylène.

8. Membrane composite de polypropylène selon la revendication 6, dans laquelle une troisième couche de revêtement est disposée entre la seconde membrane de polypropylène et le revêtement de polyuréthane ; et la troisième couche de revêtement est un revêtement de polypropylène chloré ou un revêtement de polyuréthane réactif.

9. Membrane composite de polypropylène selon la revendication 6, dans laquelle la seconde membrane de polypropylène est la membrane de polypropylène de la revendication 1.

10. Membrane de polypropylène selon l'une quelconque des revendications 1 à 5, dans laquelle la modification de rayonnement est effectuée à une dose de rayonnement comprise entre 40 et 100 kGy.

11. Membrane composite de polypropylène selon l'une quelconque des revendications 6 à 9, dans laquelle l'administration de rayonnement présente une dose de rayonnement comprise entre 40 et 100 kGy.
